## Europäisches Patentamt
## European Patent Office
## Office européen des brevets

(11) Veröffentlichungsnummer: **0 010 291**
**B1**

(12) **EUROPÄISCHE PATENTSCHRIFT**

(45) Veröffentlichungstag der Patentschrift:
**27.10.82**

(51) Int. Cl.³: **H 02 B 1/08**

(21) Anmeldenummer: **79103991.0**

(22) Anmeldetag: **16.10.79**

(54) **Schaltschrank.**

(30) Priorität: **24.10.78 DE 2846155**

(43) Veröffentlichungstag der Anmeldung:
**30.04.80 Patentblatt 80/9**

(45) Bekanntmachung des Hinweises auf die Patenterteilung:
**27.10.82 Patentblatt 82/43**

(84) Benannte Vertragsstaaten:
**AT BE CH FR GB IT NL SE**

(56) Entgegenhaltungen:
**FR-A-1 496 775**
**FR-A-1 575 650**
**FR-A-2 333 407**
**US-A-2 808 309**

(73) Patentinhaber: **Rittal-Werk Rudolf Loh GmbH & Co. KG,
Auf dem Stützelberg, D-6348 Herborn (DE)**

(72) Erfinder: **Andreas, Hugo, D-6342 Haiger-Weidelbach
(DE)**

(74) Vertreter: **Vogel, Georg, Auenweg 14,
D-7141 Schwieberdingen (DE)**

BUNDESDRUCKEREI BERLIN

## Schaltschrank

Die Erfindung betrifft einen Schaltschrank für die Aufnahme von Einbauteilen, wie Schalt- und/oder Steuerungselementen, mit einer separat hergestellten rahmenartigen, profilierten Zarge, welche die Seitenwände, die Deckwand und die Bodenwand des Schaltschrankes bildet und die an den Zargenrändern abgewinkelte Befestigungsflansche aufweist, an denen die Rückwand und die Tür oder die Vorderwand angebracht sind.

Schaltschränke sollen möglichst viele Befestigungsstellen aufweisen, damit für die Anbringung von Einbauteilen weitgehende Freiheit besteht. Die Befestigungsstellen sollen so beschaffen sein, daß sie mit dem Schrankkörper fest verbunden sind, um eine sichere Halterung von Einbauteilen zu gewährleisten. Diese Forderungen werden zum Teil von gelochten Montageplatten erfüllt, jedoch besteht das Bedürfnis, zusätzliche Befestigungsstellen zur Verfügung zu haben, damit auch außerhalb einer Montageplatte Befestigungen möglich sind bzw. spezielle Montageplatten überhaupt vermieden werden können. Obwohl an Schaltschränke relativ hohe Anforderungen hinsichtlich Stabilität und Dichtheit gestellt werden, sollen sie möglichst billig hergestellt werden können.

Ein Schaltschrank mit einer geschlossenen Zarge ist durch die FR-A 1 575 650 bekannt. Dabei sind die Befestigungsflansche nur an einem Teil der Zargenränder angebracht und dienen in der Regel nur zur Anbringung von Gelenken für eine Tür, sowie als Anlagefläche für diese Tür.

Ein derartiger Schaltschrank erfüllt aber nicht die eingangs gestellten Forderungen, da er insbesondere durch eine Rückwand und eine Tür oder eine Vorderwand nicht dicht abgeschlossen werden kann.

Es ist Aufgabe der vorliegenden Erfindung, einen Schaltschrank der eingangs erwähnten Art zu schaffen, der durch die Verwendung eines profilierten Ausgangsmaterials für die Zarge in der Herstellung vereinfacht werden kann und bei dem durch besondere Ausgestaltung der Zargenränder mit den Befestigungsflanschen die Rückwand und die Tür oder die Vorderwand absolut dicht mit der Zarge verbunden werden können.

Diese Aufgabe wird nach der Erfindung dadurch gelöst, daß die Befestigungsflansche gegenüber ihren zugekehrten Zargenrändern zurückgesetzt sind, daß die Befestigungsflansche der vorderen Zargenränder parallel und die Befestigungsflansche der hinteren Zargenränder rechtwinklig zu den jeweils zugekehrten Zargenwänden verlaufen und daß die Befestigungsflansche jeweils über U-förmig gebogene Abschnitte unter Bildung einer jeweils zur Außenseite der Zarge hin offenen Nut für Dichtungselemente in die zugeordneten Zargenwände übergehen.

Durch diese Ausgestaltung der Zargenränder und Befestigungsflansche können ohne zusätzliche Befestigungsmittel die Dichtungselemente eingesetzt werden, die bei der Anbringung der Rückwand, der Tür oder der Vorderwand für die eindeutige Abdichtung des so zusammengesetzten Gehäuses sorgen. Darüber hinaus bieten die so ausgerichteten Befestigungsflansche zusätzlich die Möglichkeit, daß daran auch andere Einbauteile befestigt werden können.

Die Anbringung von zusätzlichen Einbauteilen an den Befestigungsflanschen wird nach einer Ausgestaltung dadurch erleichtert, daß die Befestigungsflansche mit Reihen von Löchern versehen sind. Dabei ist es von Vorteil, wenn die Auslegung so ist, daß die Löcher an zueinander parallel liegenden Befestigungsflanschen in horizontaler oder vertikalen Ebenen angeordnet sind.

Das Biegen des Zargenbandes zur geschlossenen Zarge wird dadurch erleichtert, daß die Befestigungsflansche in den Eckbereichen der Zarge mit Abschnitten versehen sind. Der Abschluß der Zarge mit einer Rückwand erfolgt nach einer Ausgestaltung derart, daß an den Befestigungsflanschen der hinteren Zargenränder eine Rückwand oder eine Montageplatte angelegt und mit diesen verbunden ist.

Der Abschluß der Zarge auf der Vorderseite sieht nach einer weiteren Ausgestaltung vor, daß an den Befestigungsflanschen der vorderen Zargenränder Befestigungswinkel angebracht sind und daß mit den senkrecht zu den Befestigungsflanschen stehenden Schenkeln der Befestigungswinkel eine Tür oder eine Vorderwand verbunden ist.

Die einstückige Anbringung der Befestigungsflansche an der Zarge wird dadurch ermöglicht, daß die Zargenränder über 180°-Abbiegungen in die U-förmig gebogenen Abschnitte der Befestigungsflansche übergehen und daß die parallel zu den zugeordneten Zargenwänden verlaufenden Befestigungsflansche der vorderen Zargenränder über 180°-Abbiegungen in ihre zugeordnete U-förmig gebogenen Abschnitte übergehen.

Ist nach einer Weiterbildung vorgesehen, daß die Befestigungsflansche in den Eckbereichen der Zarge unterteilt sind und daß nach dem Biegen der Zarge die sich überlappenden Bereiche der unterteilten Befestigungsflansche fest miteinander verbunden sind, dann wird durch die geschlossenen umlaufenden Befestigungsflansche die Stabilität der Zarge verbessert.

In den Zeichnungen ist ein Ausführungsbeispiel der Erfindung dargestellt. Es zeigt

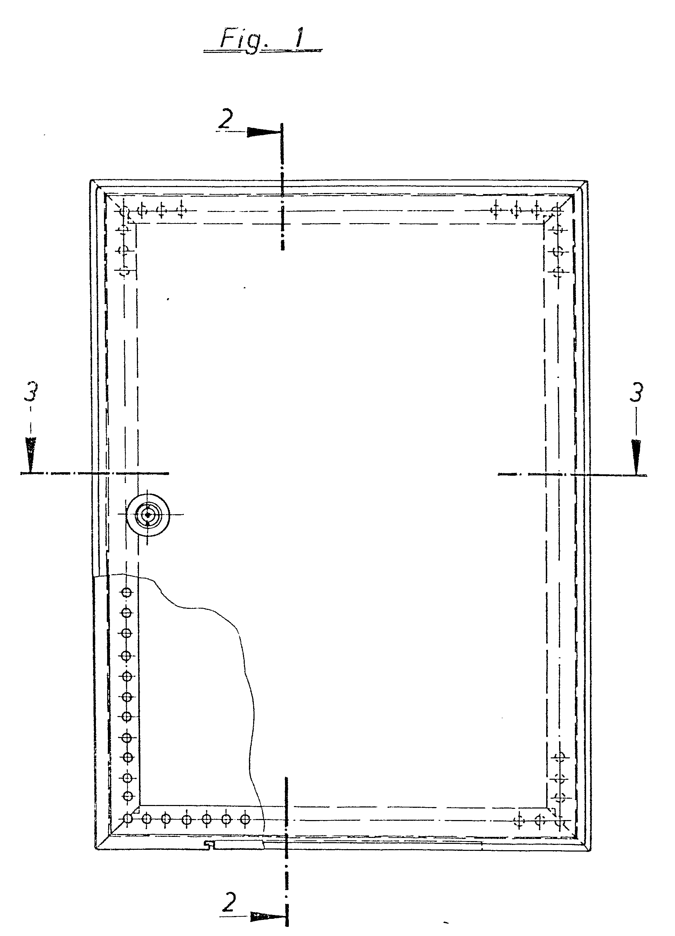

Fig. 1 eine Vorderansicht eines Schaltschrankes gemäß der Erfindung,

Fig. 2 einen senkrechten Schnitt nach Linie 2-2 in Fig. 1,

Fig. 3 einen horizontalen Schnitt nach Linie 3-3 in Fig. 1,

Fig. 4 eine perspektivische Darstellung der Ausbildung einer hinteren Zargendecke und

Fig. 5 eine perspektivische Darstellung der Ausbildung einer vorderen Zargenecke.

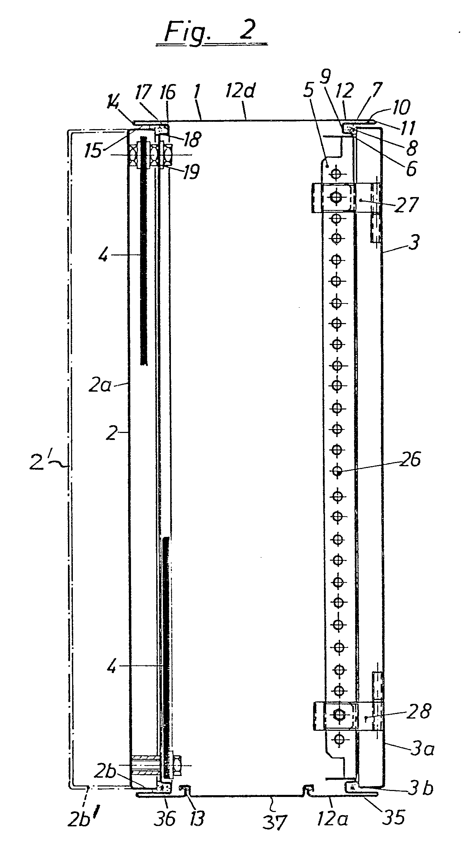

Der Schrank besteht im wesentlichen (s. Fig. 2) aus einer Zarge 1, einer Rückwand 2 und einer Tür 3. Innerhalb des Schrankes kann auch eine Montageplatte 4 angebracht sein, wobei in Fig. 2 zwei Anbringungsmöglichkeiten für die Montageplatte gezeigt sind.

Zunächst soll das Pofil der Zarge 1 betrachtet werden. Bei dem dargestellten Ausführungsbeispiel sei angenommen, daß es sich um eine aus Stahlblech geformte Zarge handelt. Die Zarge 1 bildet an der Schrankvorderseite einen Befestigungsflansch 5. Der Befestigungsflansch 5 erstreckt sich parallel zu der jeweiligen Zargenwand. Er geht über eine 180°-Abbiegung 6 in einen Abschnitt 7 über, der die Wand einer Nut 8 für ein Dichtungselement 35 bildet. Der Abschnitt 7 geht in einen Abschnitt 9 über, der den Grund der Nut 8 bildet. Der Abschnitt 9 geht über eine 90°-Abbiegung in einen Abschnitt 10 über, der parallel zum Abschnitt 7 verläuft. Der Abschnitt 10 geht über eine 180°-Abbiegung 11 in einen Abschnitt 12 über, der parallel zum Abschnitt 10 verläuft, wobei die Abschnitte 10 und 12 ohne Zwischenraum aneinanderliegen. ·

Der Abschnitt 12 setzt sich über die gesamte Breite der Zarge 1 fort. Allerdings ist an der unteren Zargenwand 12a, die die Bodenwand bildet, ein Durchbruch 13 vorhanden, der mit einem Deckel 37 abschließbar ist. Der Durchbruch 13 befindet sich in einer Vertiefung der Zargenwand 12a. Die Zargenwände 12b, 12c der Zarge 1 bilden die Seitenwände und die Zargenwand 12d bildet die Deckwand der Zarge 1.

An der Rückseite der Zarge 1 geht der Abschnitt 12 über eine 180°-Abbiegung 14 in einen Abschnitt 15 über, der an der Zargenwand anliegt, so daß dort eine gleiche Doppelung vorhanden ist wie an der Vorderseite der Zarge 1. Der Abschnitt 15 geht über eine 90°-Abbiegung in einen Abschnitt 16 über, der den Grund einer Nut 17 für das Dichtungselement 36 bildet. Der Abschnitt 16 geht über eine rechtwinklige Abbiegung in einen Abschnitt 18 über, der über eine weitere 90°-Abbiegung in den Befestigungsflansch 19 übergeht, der sich rechtwinklig zu den Zargenwänden 12a bis 12d erstreckt.

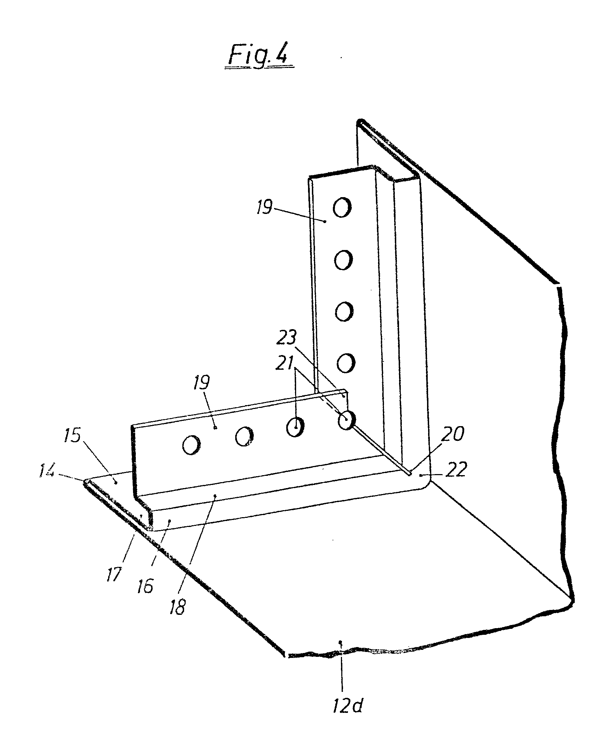

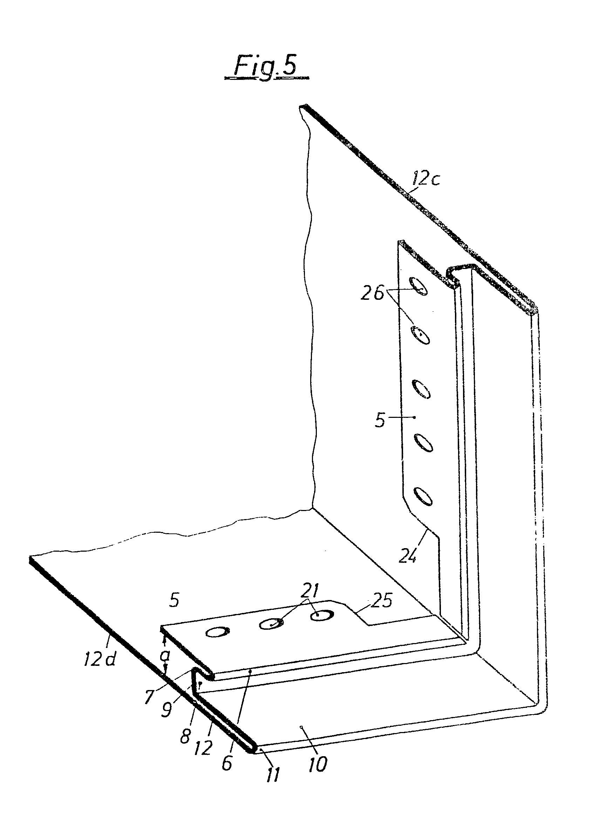

Die diversen Abschnitte sind auch in den vergrößerten Darstellungen nach den Fig. 4 und 5 bezeichnet und können dort besser unterschieden werden.

Die Zarge 1 wird dadurch hergestellt, daß zunächst ein Band mit dem beschriebenen Profil gewalzt wird. Das Band wird dann in Stücke unterteilt und in die Befestigungsflansche 5 und 19 werden Löcher 21 und 26 gestanzt, deren Anordnung noch beschrieben wird. Außerdem müssen in den späteren Ecken Einschnitte bzw. Ausklinkungen vorgesehen werden. Die Eckausbildungen sollen nachstehend anhand der Fig. 4 und 5 beschrieben werden.

Fig. 4 zeigt eine hintere Zargenecke. Vor der Herstellung der Zargenecke wurde eine Ausklinkung 20 angebracht. Diese Ausklinkung 20 reicht etwa noch über die Hälfte der Tiefe des Abschnittes 16. Jenseits des im Eckbereich liegenden Loches 21 überlappen sich die rechtwinklig aneinander anschließenden Befestigungsflansche 19 und sind durch Punktschweißung miteinander verbunden. In dem Bereich 22 zwischen dem Ende der Ausklinkung 20 und der Zargenecke läßt sich das Material so weit verformen, daß ein Umbiegen der Zarge 1 möglich ist. An der Überlappungsstelle 23 der Befestigungsflansche 19 sind diese durch eine Punktschweißung miteinander verbunden.

Im Bereich der vorderen Ecken der Zarge 1 wurde vor deren Zusammenbiegung ebenfalls eine Ausklinkung angebracht, die sich auch nur etwa über die Hälfte des Abschnittes 7 erstreckt. Die Befestigungsflansche 5 sind jedoch weit ausgeschnitten, wie die Ausschnitte 24 und 25 zeigen, da ja eine Überlappung wegen der anderen Orientierung der Befestigungsflansche 5 nicht in Betracht kommt.

Die Befestigungsflansche 5 und 19 verlaufen jeweils über den Umfang der Zarge 1. Jeder Befestigungsflansch hat eine Lochreihe, wobei die Löcher 21 der hinteren Befestigungsflansche 19 und die Löcher 26 der vorderen Befestigungsflansche 5 in gleicher Höhe angeordnet sind, d. h. in einer horizontalen Schnittebene, die durch ein Loch 21 geht, werden auch Löcher der anderen drei senkrechten Befestigungsflansche 5 und 19 erfaßt. Entsprechendes gilt für eine senkrechte Schnittebene, die durch ein Loch der horizontalen Befestigungsflansche 5 und 19 geht. Auch diese Schnittebene erfaßt Löcher der drei anderen Befestigungsflansche. Der Teilungsabstand der Löcher 21 und 26 ist vorzugsweise über die gesamte Länge der Befestigungsflansche 5 und 19 gleichbleibend.

Das Zargenband wird so ausgeschnitten, abgeschnitten und gebogen, daß die Enden in der Mitte der unteren Zargenwand 12a, also im Bereich des Durchbruches 13, zusammenstoßen. Dort werden die Enden der Zarge 1 durch Stumpfschweißung miteinander verbunden. Die Verschweißung im Bereich des Durchbruches 13 hat den Vorteil, daß die Länge der Schweißnaht gegenüber anderen Bereichen der Zarge 1 im wesentlichen um die Breite des Durchbruches 13 verkürzt ist.

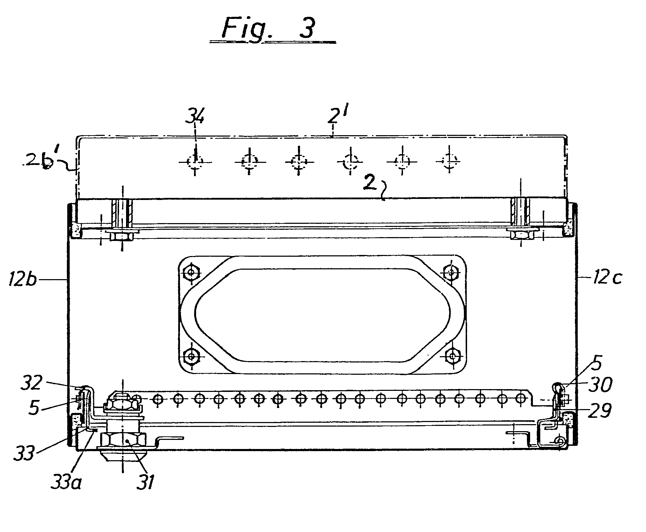

Die Tür 3 hat eine große ebene Fläche 3a, die an ihren Rändern in rechtwinklige Abkantungen 3b übergeht, die an allen Seiten der rechteckigen Fläche 3a vorhanden sind. An den Ecken sind in der Zeichnung nicht dargestellte Verschweißungen vorhanden. Die Tür 3 ist mittels insgesamt mit 27 und 28 bezeichneten Scharnieren an der Zarge 1 befestigt. Die Scharniere haben (s. Fig. 3) Befestigungslappen 29, die an einem senkrechten Befestigungsflansch 5 anliegen und mit dem Befestigungsflansch durch Klammern 30 verbunden sind, die sowohl in den Befestigungslappen 29 als auch in ein Loch 26 des Befestigungsflansches 5 eingreifen.

An der Tür 3 befindet sich ein Schloß 31 mit einem Riegel 32, der im Schließzustand hinter die Kante eines vorderen Befestigungsflansches 5 greift.

Alternativ könnte man anstelle einer mittels Gelenken befestigten Tür 3 auch eine Vorderwand anbringen. In diesem Fall werden an den Befestigungsflanschen 5 Winkel 33 befestigt, die einen vorderen Schenkel 33a haben, der rechtwinklig zu den Zargenwänden 12b und 12c orientiert ist und an denen eine Vorderwand befestigt werden kann.

Wie schon erwähnt, kann auch eine Montageplatte 4 vorgesehen werden, die entweder (s. Fig. 2) direkt an den hinteren Befestigungsflansch 19 anschraubbar ist oder die (Alternative, die in Fig. 2 oben eingezeichnet ist) gegenüber dem Befestigungsflansch nach hinten versetzt ist. Bei dieser weiteren Art der Befestigung ist die Montageplatte 4 mit der Rückwand 2 verbunden und kann mit dieser zusammen abgenommen werden.

Die Rückwand 2 hat eine große Rückwandfläche 2a, deren Ränder in rechtwinklige Abkantungen 2b übergehen. In den Fig. 2 und 3 ist gestrichelt eine alternative Ausführunsform für eine Rückwand eingezeichnet, die mit 2' bezeichnet ist. Bei dieser Ausführungsform haben die Randabkantungen 2b' eine besonders große Höhe, so daß die Rückwand 2' über die Zarge 1 nach hinten vorragt. Hierdurch werden vorstehende Flächen gebildet, in die Kabeldurchführungen 34 (s. Fig. 3) eingebracht werden können.

Hinzuweisen ist noch auf die Dichtungselemente 35 und 36, mit denen der Schaltschrank staubdicht und spritzwasserdicht abgeschlossen wird. Es handelt sich um weichelastische Dichtungselemente, die in die Nuten 8 und 17 eingesetzt sind und an denen die Kanten der Tür 3 und der Rückwand 2 anliegen. Da in den Eckbereichen der Nutgrund nicht bis zur Ecke hin geschnitzt ist (s. hierzu insbesondere Fig. 4, Ende der Ausklinkung 20), erhält man eine sehr gute Abdichtung; es verbleibt kein offener Schlitz.

Die vorderen Befestigungsflansche 5 haben einen gewissen Abstand a von der jeweils parallelen Zargenwand 12a bis 12d, so daß das Hinterfassen der Befestigungsflansche 5 zum Zwecke der Befestigung von Einbauten möglich ist.

Im Schrank können Einbauteile direkt an den Befestigungsflanschen 5 und 19 angebracht werden. Es ist auch möglich, an den Befestigungsflanschen 5 und 19 zunächst Schienen zu befestigen, an denen dann erst die Einbauten befestigt werden.

**Patentansprüche**

1. Schaltschrank für die Aufnahme von Einbauteilen, wie Schalt- und/oder Steuerungselementen, mit einer separat hergestellten rahmenartigen, profilierten Zarge (1), welche die Seitenwände, die Deckwand und die Bodenwand des Schaltschrankes bildet und die an den Zargenrändern abgewinkelte Befestigungsflansche (5, 19) aufweist, an denen die Rückwand (2) und die Tür (3) oder die Vorderwand angebracht sind, dadurch gekennzeichnet, daß die Befestigungsflansche (5, 19) gegenüber ihren zugekehrten Zargenrändern zurückgesetzt sind, daß die Befestigungsflansche (5) der vorderen Zargenränder parallel und die Befestigungsflansche (19) der hinteren Zargenränder rechtwinklig zu den jeweils zugekehrten Zargenwänden (12a bis 12d) verlaufen und daß die Befestigungsflansche (5, 19) jeweils über U-förmig gebogene Abschnitte (7, 9, 10; 15, 16, 18) unter Bildung einer jeweils zur Außenseite der Zarge (1) hin offenen Nut (8; 17) für Dichtungselemente (35, 36) in die zugeordneten Zargenwände (12a bis 12d) übergehen.

2. Schaltschrank nach Anspruch 1, dadurch gekennzeichnet, daß die Befestigungsflansche (5, 19) mit Reihen von Löchern (21, 26) versehen sind.

3. Schaltschrank nach Anspruch 2, dadurch gekennzeichnet, daß die Löcher (21, 26) an zueinander parallel liegenden Befestigungsflanschen (5, 19) in horizontalen oder vertikalen Ebenen angeordnet sind.

4. Schaltschrank nach einem der Ansprüche 1 bis 3, dadurch gekennzeichnet, daß die Befestigungsflansche (5, 19) in den Eckbereichen der Zarge (1) mit Ausschnitten (24, 25) versehen sind.

5. Schaltschrank nach einem der Ansprüche 1 bis 4, dadurch gekennzeichnet, daß an den Befestigungsflanschen (19) der hinteren Zargenränder eine Rückwand (2) oder eine Montageplatte (4) angelegt und mit diesen verbunden ist.

6. Schaltschrank nach einem der Ansprüche 1 bis 4, dadurch gekennzeichnet, daß an den Befestigungsflanschen (5) der vorderen Zargenränder Befestigungswinkel (33) angebracht sind und daß mit den senkrecht zu den Befestigungsflanschen (5) stehenden Schenkeln (33a) der Befestigungswinkel (33) eine Tür (3) oder eine Vorderwand verbunden ist.

7. Schaltschrank nach einem der Ansprüche 1 bis 6, dadurch gekennzeichnet, daß die Zargenränder über 180°-Abbiegungen (11, 14) in die U-förmig gebogenen Abschnitte (7, 9, 10; 15, 16, 18) der Befestigungsflansche (5, 19) übergehen.

8. Schaltschrank nach einem der Ansprüche 1 bis 7, dadurch gekennzeichnet, daß die parallel zu den zugeordneten Zargenwänden (12a bis 12d) verlaufenden Befestigungsflansche (5) der vorderen Zargenränder über 180°-Abbiegungen (6) in ihre zugeordneten U-förmig gebogenen Abschnitte (7, 9, 10) übergehen.

9. Schaltschrank nach einem der Ansprüche 1 bis 8, dadurch gekennzeichnet, daß die Befestigungsflansche (5, 19) in den Eckbereichen der Zarge (1) unterteilt sind und daß nach dem Biegen der Zarge (1) die sich überlappenden Bereiche der unterteilten Befestigungsflansche (5, 19) fest miteinander verbunden sind.

## Claims

1. Switch cabinet for accommodating detachable parts, such as switching and/or controlling elements, with a separately manufactured rack-shaped profiled frame (1) which forms the side walls, the top wall and the bottom wall of the switch cabinet and which comprises angled-off mounting flanges (5, 19) at the frame edges to which both the rear wall (2) and the door (3) or the front wall are mounted, characterized in that said mounting flanges (5, 19) are set back with respect to their frame edges facing them, that said mounting flanges (5) of the front frame edges extend parallel, and said mounting flanges (19) of the rear frame edges extend rectangularly in relation to the respective facing frame walls (12a through 12d), and that said mounting flanges (5, 19), each via U-shapedly bent sections (7, 9, 10; 15, 16, 18) and by forming a groove (8; 17) for the sealing elements (35, 36), which is respectively open towards the outside of said frame (1), merge into said associated frame walls (12a trough 12d).

2. A switch cabinet as claimed in claim 1, characterized in that said mounting flanges (5, 19) are provided with rows of holes (21, 26).

3. A switch cabinet as claimed in claim 2, characterized in that said holes (21, 26) are arranged in said mounting flanges (5, 19) extending parallel in relation to one another, in either horizontal or vertical planews.

4. A switch cabinet as claimed in any one of claims 1 to 3, characterized in that said mounting flanges (5, 19), in the corner areas of said frame (1), are provided with cutaway portions (24, 25).

5. A switch cabinet as claimed in any one of claims 1 to 4, characterized in that either a rear wall (2) or a mounting plate (4) is applied and connected to said mounting flanges (19) of said rear frame edges.

6. A switch cabinet as claimed in any one of claims 1 to 4, characterized in that angle brackets (33) are attached to said mounting flanges (5) of said front frame edges, and that either a door (3) or a front wall is connected to the legs (33a) of said angle brackets (33) extending vertically in relation to said mounting flanges (5).

7. A switch cabinet as claimed in any one of claims 1 to 6, characterized in that said frame edges merge into said U-shapedly bent sections (7, 9, 10; 15, 16, 18) of said mounting flanges (5, 19) via 180° bends (11, 14).

8. A switch cabinet as claimed in any one of claims 1 to 7, characterized in that said mounting flanges (5) of said front frame edges, which extend parallel in relation to said associated frame walls (12a through 12d), merge into their associated U-shapedly bent sections (7, 9, 10) via 180° bends (6).

9. A switch cabinet as claimed in any one of claims 1 to 8, characterized in that said mounting flanges (5, 19) are subdivided in the corner areas of said frame (1), and that, following the bending of said frame (10), the overlapping areas of the subdivided mounting flanges are firmly connected to one another.

## Revendications

1. Armoire de commutation pour recevoir des éléments incorporés tels que des éléments de commutation et/ou des éléments de commande, avec un châssis profilé (1) du type cadre fabriqué séparément, qui forme les parois latérales, la paroi supérieure et la paroi de fond et qui présente des pattes de fixation (5, 19) coudées sur les bords dudit châssis et sur lesquelles sont montées la paroi postérieure (2) et la porte (3) ou la paroi antérieure, armoire caractérisée par le fait que les pattes de aixation (5, 19) sont en retrait par rapport aux bords du châssis qui leur font face, par le fait que les pattes de fixation (5) des bords antérieurs du châssis et les pattes de fixation (19) des bords postérieurs de ce châssis sont respectivement parallèles et coudés à angle droit par rapport aux parois (12a à 12d) dudit châssis qui leur font respectivement face, et par le fait que les pattes de fixation (5, 19) se prolongent par les parois (12a à 12d) du châssis qui leur sont associées, par l'intermédiaire de tronçons respectifs cintrés en U (7, 9, 10; 15, 16, 18), en délimitant à chaque fois une gorge (8; 17) ouverte en direction de la face externe du châssis (1) pour des éléments d'étanchéité (35, 36).

2. Armoire de commutation selon la revendication 1, caractérisée par le fait que les pattes de fixation (5, 19) comportent des rangées de trous (21, 26).

3. Armoire de commutation selon la revendication 2, caractérisée par le fait que les trous (21, 26) de pattes de fixation (5, 19) mutuellement parallèles sont disposés dans des plans horizontaux ou verticaux.

4. Armoire de commutation selon l'une des revendications 1 à 3, caractérisée par le fait que les pattes de fixation (5, 19) sont pourvues d'échancrures (24, 25) dans les angles du châssis (1).

5. Armoire de commutation selon l'une des revendicidations 1 à 4, caractérisée par le fait qu'une paroi postérieure (2) ou une plaque de montage (4) est appliquée contre les pattes de fixation (19) des bords postérieurs du châssis et est reliée à ces dernières.

6. Armoire de commutation selon l'une des revendications 1 à 4 caractérisé par le fait que des cornières de fixation (33) sont montées sur les pattes de fixation (5) des bords antérieurs du châssis, et par le fait qu'une porte (3) ou une paroi antérieure est reliée aux branches (33a) desdites cornières de fixation (33) perpendiculaires auxdites pattes de fixation (5).

7. Armoire de commutation selon l'une des revendications 1 à 6, caractérisée par le fait que les bords du châssis se prolongent, par l'intermédiair de rabats (11, 14) coudés à 180°, par les tronçons (7, 9, 10; 15, 16, 18) cintrés en U des pattes de fixation (5, 19).

8. Armoire de commutation selon l'une des revendications 1 à 7, caractérisée par le fait que les pattes de fixation (5) des bords antérieurs du châssis, parallèles aux parois (12a à 12d) de ce châssis qui leur sont associées, se prolongent, par l'intermédiaire de rabats (6) coudés à 180°, par les tronçons (7, 9, 10) cintrés en U qui leur sont associés.

9. Armoire de commutation selon l'une des revendications 1 à 8, caractérisée par le fait que les pattes de fixation (5, 19) sont subdivisées dans les angles du châssis (1), et par le fait que, après le coudage de ce châssis (1), les régions se chevauchant desdites pattes de fixation subdivisées (5, 19) sont mutuellement assujetties.

Fig. 1

Fig. 2

## Fig. 3

Fig.4

## Fig.5